# EUROPÄISCHE PATENTSCHRIFT

(11) **EP 1 512 645 B1**
(45) Veröffentlichungstag und Bekanntmachung des Hinweises auf die Patenterteilung: **06.06.2007**
(21) Anmeldenummer: 04090305.6
(22) Anmeldetag: 30.07.2004
(51) Int. Cl.: B65G 17/00, B65G 35/06, B65G 21/20

(54) **Fördersystem, insbesondere eine Flughafen-Gepackförderanlage**
Conveying system, in particular for baggage in airports
Système de transport, en particulier pour baggage dans des aéroports

(30) Priorität: 04.09.2003 DE 10340867
(43) Veröffentlichungstag der Anmeldung: 09.03.2005
(73) Patentinhaber: SIEMENS AKTIENGESELLSCHAFT, 80333 München (DE)
(72) Erfinder: Brixius, Wolfgang, 91077 Neunkirchen A. Br (DE); Gräfer, Dominik, 44265 Dortmund-Wellinghofen (DE); Hoene, Albrecht, Dr., 93138 Lappersdorf (DE)

(56) Entgegenhaltungen:
- EP-A- 0 858 961
- DE-A- 19 708 390
- US-A- 3 753 485
- US-A1- 2002 063 037
- US-B1- 6 540 064

## Beschreibung

Die Erfindung betrifft ein Fördersystem, insbesondere eine Flughafen-Gepäckförderanlage, gemäß dem Oberbegriff des Anspruchs 1.

Aus der US 2002/0063037 A1 ist bereits ein Fördersystem für den Transport von Behältern bekannt, die Stückgut in Form von Gepäckstücken entlang einer Förderstrecke transportieren. Die Förderstrecke weist eine Vielzahl von geraden Abschnitten auf, wobei die Behälter mit ihrer Unterseite beidseitig auf Gurtförderern aufliegen. Dabei erfahren die Behälter mittels Seitenwänden eine Ausrichtung und Führung.

Das bekannte Fördersystem hat den Nachteil, dass keine kontrolliert sichere Führung der Behälter sichergestellt ist. Dies ist insbesondere dann von Nachteil, wenn die Behälter mittels einer an der Förderstrecke vorgesehenen Röntgeneinrichtung geröntgt werden sollen.

Weiter ist aus der DE 197 07 321 A1 eine Förderbahn für Behälter bekannt, bei der die Behälter entlang der Förderbahn bewegt werden. Zum Bewegen der Behälter werden diese mit Fördergurten angetrieben, die als endlos umlaufende Flachgurte ausgebildet und über Umlenkräder geführt sind. Eine Behälterseite liegt dabei jeweils kraftschlüssig auf einem Fördergut auf; die andere Behälterseite ist über frei drehbare Tragrollen abgestützt. Zur Führung der Behälter dient eine Führungsschiene, die jeweils mit einem an der Unterseite der Behälter vorgesehenen stiftförmigen Führungselement zusammenwirkt. Das Führungselement ist in der Führungsschiene geführt und verhindert zusätzlich ein Abheben der Behälter von der Förderbahn. Die Führung erfolgt mittels zweier in Transportrichtung verlaufender Längsseiten der Führungsschiene, wobei auch die Querbewegung der Behälter verhindert wird.

Außerdem ist aus der DE 699 03 284 T2 ein Fördersystem zum Transport von Gütern, beispielsweise Gepäckstücken an Flughäfen, bekannt, die in Behältern angeordnet sind, welche entlang einer Förderbahn durch Antriebsmittel in Form eines Gurtförderers bewegt werden. Die Gurtförderbahn weist gerade Führungsschienen für die Behälter auf. Die Führungsschienen greifen zur Führung jeweils in eine zwischen Rippen befindliche Behälternut ein.

Ferner offenbart die DE 197 08 390 C2 ein gleisgebundenes Flurfördersystem mit Flurförderzeugen, die drehbar gelagerte Räder aufweisen, die auf einem textilen Laufbelag abrollen, der sich auf einem Gleisgutkörper befindet und so eine Lauffläche für die Räder bildet. Innenseitig begrenzen bandförmige Seitenführungen die Laufflächen. An diesen rollen innenseitig Führungsrollen mit vertikalen Drehachsen ab, die an der Unterseite der Flurförderzeuge drehgelagert sind. Durch die Dicke der textilen Laufbeläge befinden sich die beiden Laufflächen etwas oberhalb der Grundfläche des Gleisgrundkörpers, so dass sich die Führungsrollen zur seitlichen Führung der Flurförderzeuge bis unterhalb der Laufflächen erstrecken.

Ein weiterer Fördersystem für Stückgut-Behälter ist aus der US 3753485 bekannt.

Die Aufgabe der Erfindung ist es, eine kontrollierte sichere "weiche" Führung der Behälter im Fördersystem sicherzustellen.

Die Lösung dieser Aufgabe ist durch die im Anspruch 1 angegebenen Merkmale gegeben. Durch die kennzeichnenden Merkmale der Unteransprüche ist das Fördersystem in vorteilhafter Weise weiter ausgestaltet.

Die Lösung sieht vor, dass das Führungsmittel zumindest eine im Behälter eingeformte nutförmige Ausnehmung ist, in die das gerade Führungselement eingreift und dass die Seitenführungselemente als an den Nutseitenflächen abrollende Seitenführungsrollen ausgebildet im Führungselement angeordnet sind, die aus den Längsseiten herausragen. Die Seitenführungsrollen rollen an den beiden gegenüberliegenden Nutseitenflächen der Behälter ab, was eine Zwangsführung bewirkt, die eine kontrolliert sichere Führung der Behälter erzwingt.

Aufgrund der kontrollierten sicheren Führung wird ermöglicht, dass im geraden Förderstreckenabschnitt einer Röntgeneinrichtung zum Röntgen der Stückgüter einschließlich Behälter angeordnet ist.

Eine einfache konstruktive Ausführung sieht vor, dass die Behälter mit ihrer Unterseite unmittelbar auf Fördergurten aufliegend transportiert werden, die sich wiederum auf den Stützelementen abstützen.

Wenn zumindest an einer Seitenfläche ein in Transportrichtung beabstandetes Paar Seitenführungsrollen angeordnet ist, lässt sich die Genauigkeit der Führung weiter verbessern.

Eine nochmalige Verbesserung ergibt sich, wenn der Abstand der Seitenführungsrollenpaare der Behälterlänge entspricht.

Die Kräfte bei der Führung der Behälter sind unabhängig von deren Gewicht und dem Gewicht des Fördergutes, wodurch höhere Beschleunigungs- und Verzögerungskräfte übertragen werden können, wenn die Seitenführungsrollen angetrieben sind.

Eine sichere und gleichzeitig geschmeidigere Führung ergibt sich, wenn das Führungselement aus gleitfähigem Kunststoff oder aus Blech besteht.

Eine Anpassung an unterschiedliche Fördersysteme wird erleichtert, wenn die Stützelemente als Seitenholme ausgebildet sind, die beidendig Endstücke aufweisen, in denen Gurtführungsrollen drehgelagert sind, über welche der Fördergurt läuft, der fördernde Teil auf der Oberseite und der rückführende Teil auf der Unterseite des Seitenholms.

Konstruktiv einfach ist es, wenn die Endstücke in die Seitenholme eingeschoben oder aufgeschoben sind.

Die Länge eines Förderelementes lässt sich leichter ändern, wenn eines die Seitenholme mittels eines in die Seitenholme ein- bzw. aufschiebbaren Zwischenstücks verlängerbar sind, in das dann das Endstück ein- bzw. aufschiebbar ist.

Ein einfacher Gurtwechsel ergibt sich, wenn die Gurtführungsrollen ballig ausgebildet sind, so dass der Fördergurt von Hand auf- und wieder abschiebbar ist.

Bei einem einfach ausgeführten Behälter ist die nutförmige Ausnehmung in die Unterseite mittig eingeformt.

Die Erfindung wird nachfolgen anhand einer Zeichnung näher beschrieben. Es zeigen:
- Fig. 1: einen Förderer eines geraden Förderstreckenabschnitts eines Fördersystems,
- Fig. 2: einen für den Förderer gemäß Fig. 1 geeigneten Behälter,
- Fig. 3: den Endbereich eines Seitenholms des Förderers gemäß Fig. 1 mit Endstück und
- Fig. 4: ein Zwischenstück zur Verlängerung des Seitenholms gemäß Fig. 2.

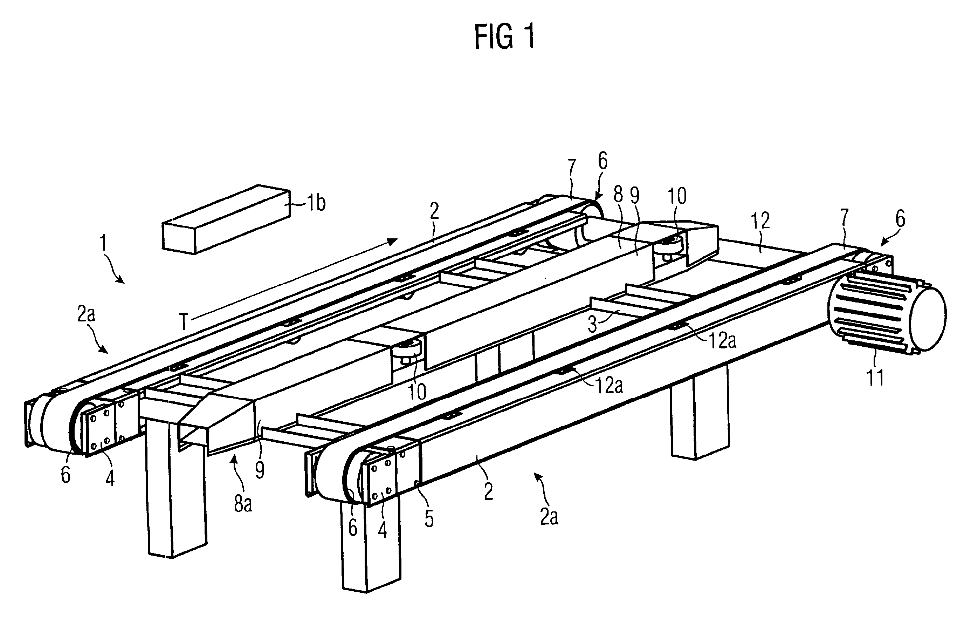

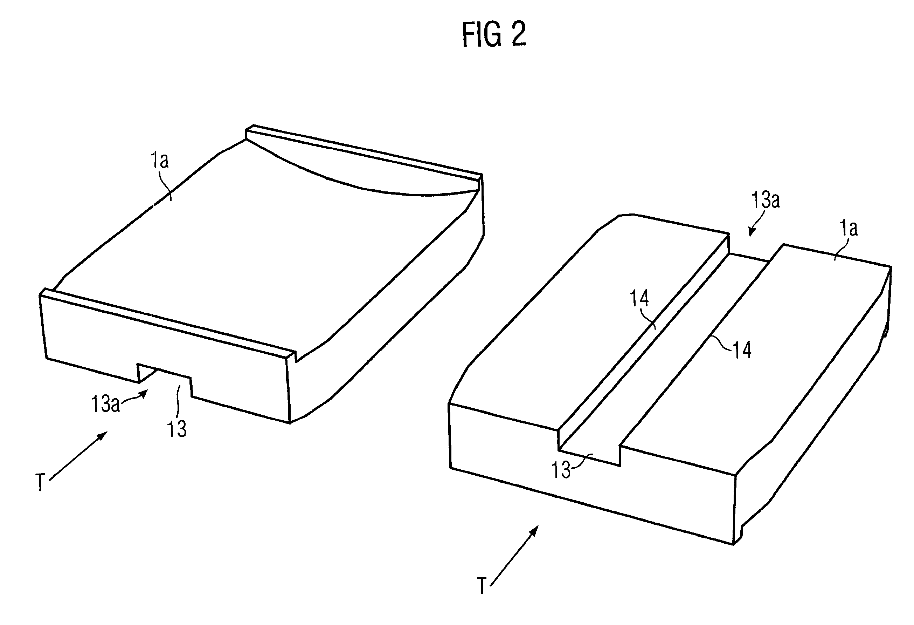

Fig. 1 zeigt einen Förderer 1 eines geraden Förderstreckenabschnitts einer nicht gezeigten Flughafen-Gepäckförderanlage. Die Gepäckförderanlage dient zum Transport von Stückgut, das in Behältern 1a (s. Fig.2) in Transportrichtung T transportiert wird. Zum Röntgen der Stückgüter einschließlich Behälter 1a dient eine schematisch gezeigte Röntgeneinrichtung 1b.

Der Förderer 1 weist zwei parallel zueinander angeordnete Seitenholme 2 auf, die über Querträger 3 miteinander verbunden sind. In die beiden bezogen auf Fig. 1 vorderen Enden der Seitenholme 2 ist jeweils ein Endstück 4 eingeschoben bzw. eingesteckt und mittels Schrauben 5 am Seitenholm 2 befestigt. Die mit den Seitenholmen 2 so verbundenen Endstücke 4 bilden jeweils ein Ende der beiden Seitenholme 2.

Die vier Enden der Seitenholme 2 tragen drehgelagerte ballige Gurtführungsrollen 6, über welche jeweils ein endloser Fördergurt 7 geführt ist. Die Behälter 1a liegen beim Transport mit ihrer flachen Unterseite auf den beiden Fördergurten 7 auf und werden so von den Seitenholmen 2 abgestützt; sie sind dabei als Stützelemente 2a wirksam. Der fördernde Teil der Fördergurte 7 läuft dabei auf der Oberseite und der rückführende Teil auf der Unterseite des Seitenholms 2.

Mittig zwischen den beiden Seitenholmen 2 befindet sich ein Führungselement 8 als Führungsmittel 8a, das parallel zu den Seitenholmen 2 in Transportrichtung verläuft. Das Führungselement 8 ist aus gleitfähigen Kunststoff hergestellt, es kann aber auch aus einem Blech geformt sein. Das Führungselement 8 hat einen rechteckigen Querschnitt, wobei die Enden sich in Transportrichtung gesehen leicht verjüngen.

Wie Fig. 1 zeigt, ist an den beiden Längsseiten 9 des Führungselements 8 als Seitenführungselemente jeweils ein Paar Seitenführungsrollen 10 vorgesehen (Fig. 1 zeigt nur die beiden dem Betrachter zugewandten vorderen Seitenrollen 10; das hintere Seitenrollenpaar ist in Fig. 1 vom Führungselement 8 verdeckt). Bei den Seitenführungselementen kann es sich auch um gleitfähige Kunststoffkugeln und dergleichen handeln. Die Seitenführungsrollen 10 ragen knapp über die Längsseitenflächen der Längsseiten 9 hinaus. Der Abstand der beiden Seitenführungsrollenpaare 10, 10 entspricht etwa der Behälterlänge. Wie in Fig. 1 schematisch dargestellt, sind die beiden hinteren Gurtführungsrollen 6 von einem Motor angetrieben, von dem nur das Antriebsritzel 11 dargestellt ist. Über das Antriebsritzel 11 wird eine Welle 12 angetrieben, auf der die beiden hinteren Gurtführungsrollen 6 drehfest sitzen. Selbstverständlich können auch die Seitenrollen 10 angetrieben sein und so als Antriebsmittel dienen.

Zur Verringerung des Reibungswiderstands der Fördergurte sind in den Seitenholmen 2 frei drehbare Stützrollen 12a vorgesehen, auf denen die Fördergurte 7 aufliegen.

Fig. 2 zeigt den Behälter 1a links mit Blick auf die Oberseite und rechts mit Blick auf die Unterseite. In die Unterseite ist eine in Transportrichtung verlaufende Längsnut 13 mit den beiden gegenüberliegenden Nutseitenflächen 14 als Ausnehmung 13a ausgebildet. Beim Durchlaufen des Förderers 1 greift das Führungselement 8 in die Längsnut 13 ein, wobei die Seitenführungsrollen 10 an den beiden gegenüberliegenden Nutseitenflächen 14 abrollen.

In Fig. 1 sitzen die beiden Rollenpaare 10, 10 in Transportrichtung T gesehen im hinteren Bereich des Führungselements 8. Auf diese Weise wird erreicht, dass ein einlaufender Behälter 1a zunächst vom Führungselement 8 grob ausgerichtet und geführt wird und dass dann mittels der Seitenführungsrollen 10 eine Feinausrichtung erfolgt.

Dies prädestiniert diesen Förderer 1 zur Verwendung in Verbindung mit der Röntgeneinrichtung 1b.

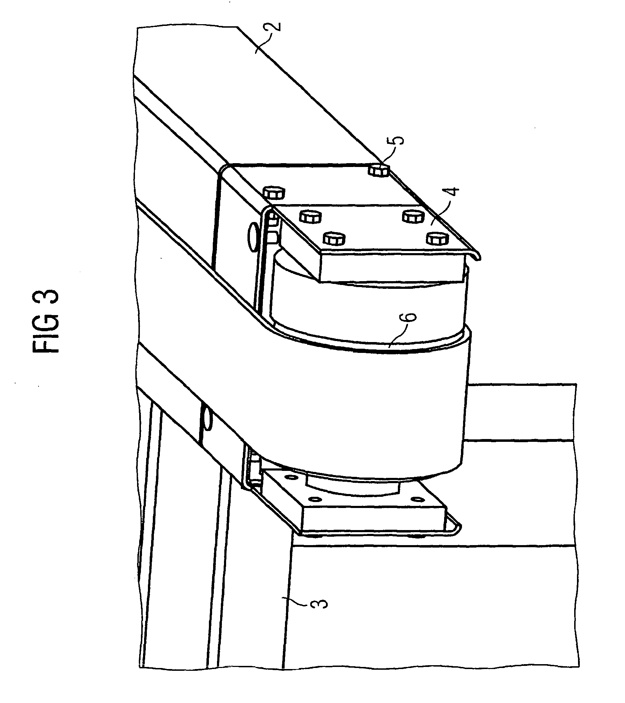

Fig. 3 zeigt das Ende des rechten Seitenholms 2 mit eingestecktem Endstück 4 in einer vergrößerten Darstellung.

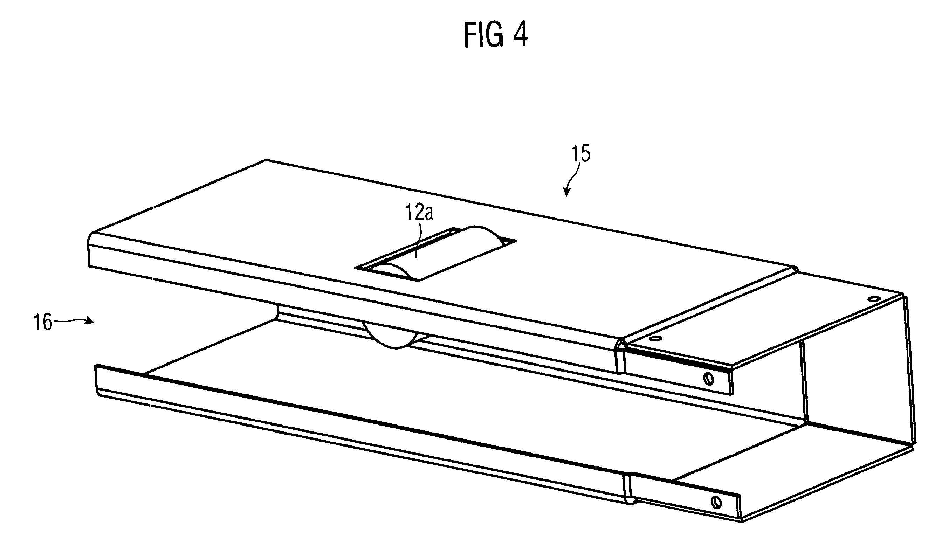

In Fig. 4 ist ein Zwischenstück 15 dargestellt, das zur Verlängerung eines Seitenholms 2 verwendet werden kann. Hierzu wird das Endstück 4 nach Lösen der Schrauben 5 vom Ende des Seitenholms 2 abgezogen und das Zwischenstück anstelle des Endstücks 4 eingeschoben und mittels Schrauben befestigt. Danach wird das Endstück 4 in die freie Öffnung 16 des Zwischenstücks 15 eingesteckt und ebenfalls mittels Schrauben 5 an diesem befestigt.

Durch die ballige Form der Gurtführungsrollen 6 lässt sich der Fördergurt 7 jeweils bequem von Hand ab- und auch wieder aufschieben.

## Patentansprüche

1. Fördersystem, insbesondere eine Flughafen-Gepäckförderanlage, mit zum Transport von Stückgut dienenden Behältern (1a), die entlang einer zumindest abschnittsweise geraden Förderstrecke mit ihrer Unterseite von Stützelementen (2a) abgestützt transportiert werden, wobei an der Förderstrecke Führungsmittel (8a) zur Ausrichtung und Führung der Behälter (1a) vorgesehen sind, deren Behälterunterseite mit jeweils zumindest einem in Transportrichtung verlaufenden geraden Führungselement (8) in Form einer im Behälter (1a) eingeformten nutförmigen Ausnehmung (13a) versehen ist, in welche die an der Förderstrecke vorgesehenen Führungsmittel (8a) eingreifen, wobei die Führungsmittel (8a) an ihren beiden Längsseiten (9) mit je einer Reihe Seitenführungsrollen (10) versehen sind, welche, aus den Längsseiten (9) herausragend, an den Nutseitenflächen (14) der nutförmigen Ausnehmung (13a) abrollen.

2. Fördersystem nach Anspruch 1,
**dadurch gekennzeichnet,**
**dass** die Behälter (1a) mit ihrer Unterseite unmittelbar auf Fördergurten (7) aufliegend transportiert werden, die sich wiederum auf den Stützelementen (2a) abstützen.

3. Fördersystem nach Anspruch 1 oder 2,
**dadurch gekennzeichnet,**
**dass** zumindest an einer Längsseite (9) ein in Transportrichtung beabstandetes Paar Seitenführungsrollen (10) angeordnet ist.

4. Fördersystem nach Anspruch 3,
**dadurch gekennzeichnet,**
**dass** der Abstand der Seitenführungsrollenpaare (10, 10) der Behälterlänge entspricht.

5. Fördersystem nach einem der Ansprüche 1 - 4,
**dadurch gekennzeichnet,**
**dass** die Seitenführungsrollen (10) angetrieben sind.

6. Fördersystem nach einem der Ansprüche 1 - 5,
**dadurch gekennzeichnet,**
**dass** das Führungselement (8) aus gleitfähigem Kunststoff oder aus Blech besteht.

7. Fördersystem nach einem der Ansprüche 1 - 11,
**dadurch gekennzeichnet,**
**dass** die nutförmige Ausnehmung (13a) in die Unterseiten der Behälter (1a) mittig eingeformt ist.

## Claims

1. Conveyor system, in particular an airport baggage handling system, having containers (1a) serving for the transport of piece goods, which containers are transported along an at least sectionally straight conveyor path with their bottom side supported by supporting elements (2a), wherein on the conveyor path guide means (8a) are provided for the alignment and guidance of the containers (1a), the container bottom side of which is provided with respectively at least one straight guide element (8), running in the transport direction, in the form of a groove-shaped recess (13a) which is moulded in the container (1a) and in which the guide means (8a) provided on the conveyor path engage, the guide means (8a) being provided on their two longitudinal sides (9) with a respective row of lateral guide rollers (10), which, protruding from the longitudinal sides (9), roll against the groove side faces (14) of the groove-shaped recess (13a).

2. Conveyor system according to Claim 1, **characterized in that** the containers (1a) are transported with their bottom side resting directly on conveyor belts (7), which are in turn supported on the supporting elements (2a).

3. Conveyor system according to Claim 1 or 2, **characterized in that** at least on one longitudinal side (9) there is disposed a pair of lateral guide rollers (10), which pair is distanced apart in the transport direction.

4. Conveyor system according to Claim 3, **characterized in that** the spacing of the lateral guide roller pairs (10, 10) corresponds to the length of the container.

5. Conveyor system according to one of Claims 1-4, **characterized in that** the lateral guide rollers (10) are driven.

6. Conveyor system according to one of Claims 1-5, **characterized in that** the guide element (8) consists of low-friction plastic or of sheet metal.

7. Conveyor system according to one of Claims 1-11, **characterized in that** the groove-shaped recess (13a) is moulded centrally in the bottom sides of the containers (1a).

## Revendications

1. Système de manutention, notamment installation de manutention de bagages, comprenant des conteneurs (1a) servant au transport de marchandises, qui le long d'un trajet de manutention au moins rectiligne par sections sont transportés en étant soutenus par leur face inférieure par des éléments de soutien (2a), des moyens de guidage (8a) étant prévus sur le trajet de manutention pour l'alignement et le guidage des conteneurs (1a), dont les faces inférieures de conteneur sont munies de respectivement au moins un élément de guidage (8) rectiligne, s'étendant dans la direction de transport, sous la forme d'un évidement (13a) en forme de rainure formé dans le conteneur (1a), dans lequel pénètrent les moyens de guidage (8a) prévus sur le trajet de manutention, les moyens de guidage (8a) étant munis sur leurs deux côtés longitudinaux (9) respectivement d'une rangée de galets de guidage latéraux (10) qui, en faisant saillie des côtés longitudinaux (9), roulent sur les surfaces latérales de rainure (14) de l'évidement (13a) en forme de rainure.

2. Système de manutention selon la revendication 1, **caractérisé en ce que** les conteneurs (1a) sont transportés en s'appuyant directement par leur face inférieure sur des courroies de convoyage (7), qui quant à elles s'appuient sur les éléments de soutien (2a).

3. Système de manutention selon la revendication 1 ou 2, **caractérisé en ce qu'**une paire de galets de guidage latéraux (10), à distance dans la direction de transport, est disposée au moins sur un côté longitudinal (9).

4. Système de manutention selon la revendication 3, **caractérisé en ce que** l'écart entre les paires de galets de guidage latéraux (10, 10) correspond à la longueur des conteneurs.

5. Système de manutention selon l'une quelconque des revendications 1 à 4, **caractérisé en ce que** les galets de guidage latéraux (10) sont entraînés.

6. Système de manutention selon l'une quelconque des revendications 1 à 5, **caractérisé en ce que** l'élément de guidage (8) est en une matière plastique apte au glissement ou en tôle.

7. Système de manutention selon l'une quelconque des revendications 1 à 11, **caractérisé en ce que** l'évidement en forme de rainure (13a) formé au milieu dans les faces inférieures des conteneurs (1a).
